# EUROPEAN PATENT APPLICATION

(11) **EP 4 664 849 A1**
(43) Date of publication of application: **17.12.2025**
(21) Application number: 24382635.1
(22) Date of filing: 12.06.2024
(51) Int. Cl.: H04L 45/02, H04L 49/15

(54) **INTERCONNECTION SYSTEM AND ROUTING METHOD FOR HIGH-PERFORMANCE COMPUTER NETWORKS**

(71) Applicant: Barcelona Supercomputing Center-Centro Nacional de Supercomputación, 08034 Barcelona (ES); Universidad de Cantabria, 39005 Santander (ES)
(72) Inventor: BEIVIDE PALACIO, Julio Ramón, 39005 Santander (ES); CAMARERO COTERILLO, Cristóbal, 39005 Santander (ES); MARTÍNEZ FERNÁNDEZ, Carmen, 39005 Santander (ES); VALLEJO GUTIÉRREZ, Enrique, 39005 Santander (ES); VALERO CORTÉS, Mateo, 08034 Barcelona (ES)
(74) Representative: TRBL Intellectual Property

(57) **Abstract**

The present invention relates to a system for connecting multi-dimensional HyperX networks. In a 1D HyperX, or Complete Interconnection Network, CIN, there is a link between any pair of switches, wherein the network comprises a plurality of servers arranged in a plurality of computer groups; wherein each computer group is connected to a connection switch. Advantageously, in this way, wires are grouping in parallel sets or guides and wherein the wire connections are arranged without crossings between said parallel guides. The invention can also be applied to hierarchical and multi-dimensional networks built upon CINs, either per network layer or per dimension, respectively, using additional horizontal dimensions (X, Y) for deploying parallel hoses of wires, arranged without crossings. The invention further relates to a compact routing mechanism which is derived from the proposed connection pattern when the number of switches in the system is a power of 2.

## Description

### FIELD OF THE INVENTION

The present invention belongs to the field of the design and deployment (also referred to as layout) of the wire arrangement and routing schemes used by interconnection networks in high-performance computing (HPC) systems, such as Dragonflies, Dragonflies+, Flattened Butterflies and HyperX and, in general, in any network whose topology is built upon Complete graphs. The invention can be used also in the layout and routing of Network-on-Chip (NoC) topologies using Complete graphs or variants thereof.

### BACKGROUND OF THE INVENTION

Interconnection networks are present in any computing platform, and are considered critical in computer engineering. With the expansion of telecommunications and the Internet, modern communication infrastructures have grown increasingly complex and, as a result, more costly to install, setup, repair and maintain. For the case of HPC supercomputers and data centers, these systems typically include not only large numbers of routers (or switches), servers, and the like, but also complex interconnection networks configured to establish data communication between the different components of said infrastructures.

In this context, the time and cost associated with the proper wiring of an HPC system, data center or other large parallel-computing infrastructure makes any wiring mistakes, as well as potential malfunctioning errors, extremely difficult to detect inside the wiring topology. As a result, any process aimed to investigate and resolve such errors becomes a complex and costly task, both in time and resources.

Interconnection networks are built around switches, which are the devices that guide the flow of data. Data are generated and consumed by the end-point computing elements: servers in the case of system networks and cores in the case of NoCs. Switches are composed of ports, and ports of different switches are connected by links (or wires) in specific ways, thereby determining the interconnection network topology. The degree, or radix, of a switch denotes its number of ports.

Interconnection networks are modelled by graphs, with vertices representing the switches and edges, the links that connect pairs of switches. There is a large number of papers analysing and comparing different networks, but mainly in topological terms. They consider graph metrics such as the diameter, average distance, symmetry and bisection width, among others. Although all this work is mandatory to understand the fundamentals of different topologies, in practice, the pursued goal is to maximize the network performance and resiliency at the minimum cost.

Choosing a convenient interconnection layout for an interconnection network becomes also very valuable for specific topologies, since it is known that certain arrangements of servers can be more effective at certain types of computational tasks than others. Moreover, the advent of large-degree switches has enabled the possibility of using Complete graphs for interconnection networks with a moderate number of servers. In a Complete graph, every pair of vertices is connected by a link. Networks connected using a single Complete graph are denoted in this invention as Complete Interconnection Networks (CINs). In other technical publications, they are also referred to as "full-meshes" or "fully-connected networks", or "1D HyperX networks". In this context, a CIN of N switches can be understood as a fabric allowing to communicate any pair of switches by traversing just one link (wire connection). To do that, switches must have at least N-1 ports, and every switch is connected to the remainder N-1 switches. In addition, each switch has N more ports to connect end-point computers. The underlying topology of a CIN of N switches is the Complete graph, K_{N}, which requires N-1+N-2+...+2+1 = N(N-1)/2 links or wires. For example, with regular 64-port switches, a CIN can be built based on a Complete graph K₃₂, with 32 switches equipping 1024 servers (32 servers per switch) and employing 496 (32x31/2) wires. The switches employ 63 ports: 32 for connecting end-point servers and 31 to connect to other switches.

Apart from the link speed, the most important switch attribute is its number of ports, or the switch radix. Due to technological limitations, this radix cannot be arbitrarily large, which bounds the maximum size of a CIN. To overcome such scaling limitation, computer architects have designed networks based on compositions of complete graphs.

Large deployments, with a higher number of servers, require either hierarchical or multi-dimensional topologies based on CINs, such as Dragonfly, Dragonfly+ and Flattened Butterfly (or HyperX) networks. Dragonfly networks are hierarchical interconnection networks in which servers and switches are organized in multiple groups, interconnected to each other using a global network. Typical Dragonflies are based on CINs, both for the local topologies of their groups and for the global network. Dragonfly+ is similar, but it employs a CIN for the global network, and not for the local topology per group. Dragonfly and Dragonfly+ networks have been employed in large parallel computer systems from IBM, HPE and Mellanox/Nvidia.

Another interesting case is the HyperX network (see J. H. Ahn et al., "HyperX: Topology, routing, and packaging of efficient large-scale networks" in Proceedings of the Conference on High Performance Computing Networking, Storage and Analysis, ser. SC '09, New York, NY, USA: ACM, 2009, pp. 1-11). It is a multi-dimensional topology obtained from the Cartesian graph product of complete graphs. The 1D HyperX instance corresponds to a pure single CIN. Small CINs (1D HyperX) have been employed to connect CPU and accelerator chips on server boards and have been also considered for NoCs (see N. Akbari and M. Modarressi, "A high-performance network-on-chip topology for neuromorphic architectures" in 2017 IEEE International Conference on Computational Science and Engineering, pp. 9-16, 2017). 2D and 3D HyperX networks have been employed in large parallel computer systems from HPE and Intel.

The same HyperX topology has been denoted also as Flattened Butterfly in other works, which are, as mentioned above, Cartesian graph products of Complete graphs. This is, they employ CINs (1D HyperX) in each of their dimensions. As an example of these connection topologies, patent documents US 8,285,789 B2 and US 9,614,786 B2 disclose different embodiments of a Flattened Butterfly processor interconnect network and a Dragonfly processor interconnect network, respectively. These networks are totally based on CINs. In the Cartesian representation of a 2D Flattened Butterfly each row and column of the resulting grid is a CIN, and the same occurs with other dimensions in multi-dimensional Flattened Butterflies or HyperX networks.

However, none of the above documents provide a solution to the problem of how to design optimized layouts that efficiently reduce the complexity of the interconnection wiring network, thereby achieving layouts which are easier to install, repair and replace compared to the known alternatives, without incurring in higher time and resource costs.

The present invention is aimed at solving the aforementioned problem, by proposing a novel system and a method for connecting HyperX Networks for high-performance computers. The invention further discloses different embodiments of "Linearly Arranged CINs" (hereafter, LACINs), which allow organizing the network wires of a CIN by means of the use of parallel guides for grouping sets of individual wires, avoiding any guide crossing. The invention can also be advantageously applied to hierarchical and multi-dimensional networks, as the ones described above, either per network layer or per dimension, respectively. More specifically, when the number of switches is a power of 2, the invention includes a compact routing mechanism which is derived from the proposed wiring organization. This routing can be used regardless of if the network is going to be linearly deployed, as LACIN, or not.

### SUMMARY OF THE INVENTION

In order to solve the problems described in the preceding section, a first object of the invention relates to a system for connecting a Complete Interconnection Network, CIN or 1D HyperX, wherein:
- the CIN comprises a plurality of computers arranged in a plurality of computer groups;
- each computer group is connected to a switch, wherein each switch comprises a plurality of ports comprising, in turn, at least a first port group for connecting the switch to a computer group, and a second port group for connecting the switch to the remainder computer groups;
- switches are aligned along a dimension with their second port group substantially aligned in said dimension;
- any pair of switches in the CIN is connected by means of a wire connection.

Advantageously in the system of the invention, each port in the second port group of every switch is connected to the same port in the second port group of a different switch, by means of a wire connection. Consequently, for any pair of switches, only pairs of ports that occupy identical positions (i.e., having the same index number) are connected. Moreover, the wire connections connecting the ports of different switches can be arranged in sets or guides of wires along the dimension in which switches are aligned, such that the wire sets do not cross, forming a Linearly Arranged CIN (LACIN). More preferably, the CIN (1D HyperX) has a number of switches that is a power of two and, for a standard labelling or numbering of the switches and their ports, every pair of switches is linked through a single wire that connects a pair of ports whose index number is the bitwise exclusive-or operation of the index numbers of the switches being connected.

For a large number of servers, the layout design according to the invention can be less costly compared to the known alternatives in the art, due to the avoidance of wire crossings between the wire connections. Additionally, it does not add topological complexity to the terminal or connector requirements. Moreover, the proposed methodology ensures that the connections are deployed without crossings between guides of wires. Thus, the invention substantially reduces wire complexity (which can be an important problem in networks made of hundreds or thousands of servers, and beyond) compared to the prior art and relaxes the need of applying wire labelling and coloring, as well as simplifying the operations of maintenance or repair inside the network.

Within the scope of interpretation of the present invention, the word "crossing" will be understood, preferably, as a crossing in one projection plane formed by the switches along the dimension in which switches are aligned, with or without physical contact between the crossed wires.

More specifically, the first object of the invention relates to a connection system which will be hereinafter denoted as "HyperXor", suitable for implementing q-dimensional HyperX networks, wherein:
- the system comprises a plurality of end-point computers arranged in a plurality of computer groups;
- each computer group is connected to a switch, wherein each switch comprises a plurality of ports comprising, in turn, a first port group for connecting the switch to a computer group, and q groups of ports for connecting the switch to the remainder computer groups in each network dimension, forming an interconnection topology based on complete graphs along q dimensions, with q being an integer number;
- switches are aligned along the q dimensions with their q port groups substantially aligned in each network dimension; and
- switches in the system are connected by means of ports organized in q dimensions; wherein, advantageously, each port of every switch in each of the q port groups, or dimensions, is connected to the same port of the same port group or dimension of a different switch in each dimension, by means of a wire connection and, for any pair of switches, only pairs of ports that occupy identical positions according to a same index number are connected;

wherein the wire connecting the ports of different switches are arranged in sets or guides of wires along the dimension in which switches are aligned, such that the wire sets do not cross (however, if required by an application, HyperXor systems can also arrange their switches in any way, provided that ports are connected as dictated by the XOR connection pattern);
wherein the system has a number of switches per dimension that is a power of two, 2", and a number of 2" end-point computers in each computer group; and
wherein each individual end-point computer, K, is identified by q+1 digits of n bits each, K = K_{q}... K₀, with the first q digits K_{q}...K₁ being the switch coordinates, and K₀ being the relative position of the individual end-point computer in that switch and, for a numbering of the switches and their ports, every pair of switches is linked through a single wire that connects a pair of ports whose index number is the bitwise exclusive-or, XOR, operation of the index numbers of the switches being connected.

In a further preferred embodiment of the invention, the q-dimensional system forms part of a larger interconnection network comprising a topology in which wire connections are grouped as a 1D HyperX. This configuration is considered advantageous for its application to known highly complex networks, wherein the optimization of wire connections is considered highly valuable.

In a more preferred embodiment of the invention, the topology is a 2-dimensional HyperX or Flattened Butterfly and comprises a lineal or matrix array of server racks arranged in substantially horizontal dimensions (X, Y), and, wherein each server rack comprises one or more computer groups connected each to a connection switch. Dimensions X and Y are organized as LACINs using just one wire between switches in each dimension.

In a more preferred embodiment of the invention, the topology is a 3-dimensional HyperX or Flattened Butterfly and comprises a lineal or matrix array of server racks arranged in substantially horizontal dimensions (X, Y), and, wherein each server rack comprises one or more computer groups connected each to a connection switch composing a LACIN in a dimension Z. Dimensions X and Y are organized as LACINs but using bundles of wires between racks.

In a more preferred embodiment of the invention, the topology comprises at least one of the following networks: Dragonfly, Dragonfly+, Flattened Butterfly, HyperX.

In a further preferred embodiment of the invention, the inter-rack wires that connect ports in a set are bundled together in hoses. This configuration is considered advantageous for further reducing the complexity of the interconnection networks. Preferably, the connections grouped in hoses correspond to wire connections between switches of different racks at ports with same offset or index number. More preferably in the invention, the wires or the hoses can also be labelled by text or by coloring, thus further simplifying their identification during repair, substitution or maintenance operations.

In a further preferred embodiment of the invention, for practical reasons, the interconnection topology is 1-dimensional, 2-dimensional or 3-dimensional. Nevertheless, the invention can be applied to any number of dimensions.

In a further preferred embodiment of the invention, at least two switches are arranged in a server rack.

In a further preferred embodiment of the invention, the wire connections between the server racks are arranged underfloor or aerially substantially along at least a horizontal dimension (X, Y).

In a further preferred embodiment of the invention, at least a switch further comprises extra fault-tolerance or upgrading ports; and/or at least a computer group and a switch are integrated in a printed circuit board, PCB. These configuration options are considered advantageous for their application to current server rack switches, which typically allow for extra connection ports which can provide for further functionalities, or which are integrated in PCBs according to known standard technologies usually found in the industry of server rack technologies.

In a further preferred embodiment of the invention, the q-dimensional HyperX is implemented as a Network-on-Chip. This configuration is considered advantageous for the chip industry, where an optimized layout of wire connections is considered highly valuable for the reduction of costs related to the chip manufacturing processes.

In a further preferred embodiment of the invention:
- at least a computer group is connected to a connection switch through injection/ejection and-point ports;
- at least a switch further comprises extra fault-tolerance or upgrading ports; and/or
- at least a computer group and a switch are integrated in a printed circuit board, PCB.

A second object of the invention relates to a method for routing data between the end-point computers connected to the switches of a HyperXor system according to any of the preceding claims,
wherein the ports in the switches comprise 2ⁿ ports named C, with C = C₂ⁿ _{- 1} ...C₀, connecting end-point computers, and *q*(2ⁿ - 1) network ports, 2ⁿ - 1 per dimension, named P, with P = P₂ⁿ ₋₁...P₁, interconnected with other switches,
wherein the network ports are identified by *i*-P*,* with 1 ≤ *i* ≤ *q*, where i is the system's dimension to which the port belongs, and P, with 2ⁿ-1 ≤ P ≤ 1, is the binary port label of the switch for the dimension *i*.

Advantageously, said method comprises performing the following routing steps for sending data from an origin computer *O* = *O_{q}...O₀* to a destination computer *D* = *D_{q}...D₀*:
a) for *i* = *q,* if *P* = O*ᵢ* ⊕ *Dᵢ* is zero, then perform step b), otherwise go through port *i-P* and perform step b);
b) if *i* = 0, then eject through port *C*-*D_{c}*, otherwise perform step c);
c) perform a decrement *i* = *i* - 1, and then perform step a).

In a preferred embodiment of the invention, the data is sent through a minimal path between the origin computer *O* and the destination computer *D*.

In a further preferred embodiment of the invention, the data is sent through a non-minimal path between the origin computer O and the destination computer D, wherein the maximum length of non-minimal path is equal or less than 2q, wherein q is the network diameter, or the number of dimensions.

In a further preferred embodiment of the invention, the data is sent following an adaptative routing algorithm, using minimal or non-minimal paths depending on the nature of data traffic between the end-point computers. More preferably, the adaptative routing algorithm comprises a hop-by-hop or progressive routing algorithm.

A third object of the invention relates to a method for connecting a HyperX network, or a HyperX portion of an interconnection network, in a system according to any of the preceding claims, comprising the following steps:
- arranging a plurality of servers in computer groups,
- connecting each computer group to a switch, wherein each switch comprises a plurality of ports comprising, in turn, at least a first port group for connecting the switch to a computer group, and a second port group for connecting two computer groups connected to different switches;
- switches are aligned along a dimension with their second port group substantially aligned in said dimension; whereon such dimension is denoted Z when switches are vertically stacked, and as X or Y when switches are arranged in a horizontal dimension.

Advantageously in the invention, each port in the second port group of every switch is connected to the same port in the second port group of a different switch, by means of a wire connection. Consequently, for any pair of switches, only pairs of ports that occupy identical positions (having the same index number) are connected. Moreover, the wire connections connecting the ports of different switches are arranged in sets or guides of wires along the dimension in which switches are aligned, such that the wire sets do not cross. When using N switches, the method induces the use of N-1 parallel sets or guides containing N/2 individual wires each one when N is even, and N parallel guides that contain (N-1)/2 individual wires each when N is odd.

Specific objects and preferred embodiments of the invention refer to the claims submitted with the present document.

### BRIEF DESCRIPTION OF DRAWINGS

**Figures 1a-1b** show, respectively, a LACIN layout of a Complete graph K₁₀ which does not belong to the claimed invention, and its corresponding connection matrix.
**Figures 2a-2b** show, a 1D HyperXor of 8 switches and 64 end-point computers, according to a preferred embodiment of the invention, in two representations.
**Figure 3** shows a rack containing the dimension (Z) of a 4 × 4 × 4 3D HyperX (or Flattened Butterfly) with a XOR-based layout, according to a preferred embodiment of the invention.
**Figure 4** shows a XOR-based LACIN layout for dimensions X and Y of the 4 × 4 × 4 HyperX of Figure 3. This bundle lay-out is used for the inter-rack connection of the network by means of super-ports, according to a preferred embodiment of the invention. Super-ports can be seen as sockets composed of individual ports that interconnect the switches of two racks in each dimension by means of a set of wires included in a hose.
**Figure 5** shows a larger arrangement according to a preferred embodiment of the invention, based on a three-dimensional (3D) HyperXor network comprising an array of 16 × 16 server racks arranged in two (X, Y) dimensions, according to a preferred embodiment of the invention.
**Figure 6** shows a rack plane distribution of the vertical dimension of the 3D HyperX network presented in Figure 5, according to a preferred embodiment of the invention, wherein each rack plane represents a printed circuit board (PCB). The rack comprises sixteen switches (SWITCH-PCB₀...SWITCH-PCB₁₅), and each switch comprises sixteen injection/ejection ports for end-computers (C₀...C₁₅), fifteen Z-ports (Z₁...Z₁₅), fifteen X-ports (X₁...X₁₅) and fifteen Y-ports (Y₁...Y₁₅). Each rack implements a 16 switch LACIN, or 1D HyperXor, using the ports of the Z coordinate.
**Figure 7** shows the LACIN bundle connections of super-ports between racks in the X and Y dimensions of the 3D HyperX shown in Figure 5, according to a preferred embodiment of the invention.
**Figure 8** shows an example of a plurality of ports according to the invention for a switch of a 3D "HyperXor" 16 × 16 × 16. It comprises 16 ports C for end-point computers and 15 ports for each of its dimension, namely, X, Y, Z.
**Figure 9** shows a flow chart of an algorithmic routing for 1D HyperXor networks, according to a preferred embodiment of the invention.
**Figure 10** shows a general algorithmic routing for multidimensional HyperXor networks, according to a preferred embodiment of the invention.
**Figure 11** shows a flow chart for a 3D HyperXor routing, according to a preferred embodiment of the invention.

### DETAILED DESCRIPTION OF THE INVENTION

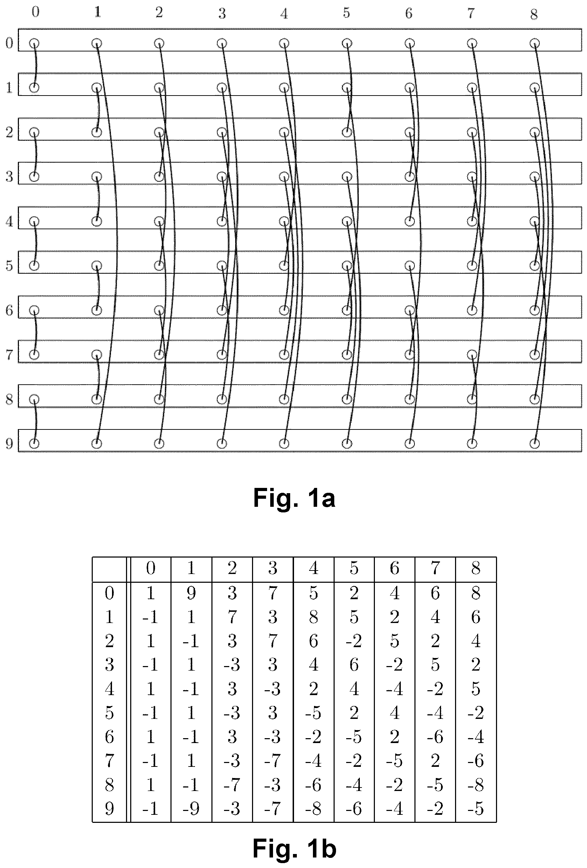

A set of five preferred embodiments of the invention, shown in Figures 1-8, will be now described for illustrative and not limiting purposes.

### Example 1:

A first example of the invention is shown in Figure 1, and relates to a CIN or 1D HyperX having an even number of switches which is not a power of two (hereinafter referred to as "*size*"). As there is a link between every pair of switches, the diameter (i.e., maximum number of hops between any pair of switches) of a CIN of any *size* is 1. To implement the CIN, the switch will have *size*-1 ports to connect to the other *size*-1 switches. Thus, the number of required links for the CIN will be *size* × (*size* - 1)/2. The way in which these links are arranged is denoted hereby as the layout of the CIN.

For simplifying the layout, a LACIN only connects pairs of switches through ports having the same offset so located at the same horizontal (H) position. Thus, the wires are organized in parallel guides in the vertical (V) dimension, so as to avoid guide crossing. For defining a LACIN of any *size,* two equivalent bi-dimensional structures can be used: the layout (Figure 1a) and the connection matrix (Figure 1b). In both figures, rows represent switches labeled from 0 to (*size* - 1), and columns represent ports, labeled from 0 to (*size* - 2). For example, in Figure 1, a 10-switch LACIN is represented. In other embodiments of the invention, the switches may have other "*size*" ports to connect servers. However, they are not represented in the figure, as they do not have any impact in the essential aspects of the claimed LACIN layout. The number of servers in this 10-switch LACIN is 100 (10x10). As previously disclosed, LACIN only connects pairs of switches through ports located at the same position on each switch (so as to avoid wire crossings), which characterizes the LACIN layout.

The method employed to generate the LACIN layout in Figure 1 is based on the fact that any even number can be decomposed as the product of a power of 2 times an odd number, that is, *size = b2^{a}.* Then, each number from 1 to *size*-1*,* when interpreted as a jump or increment, determines a cycle in the CIN, and, except in *b* cases, those cycles have even length greater than 2, and can be connected using the same two ports of different pairs of switches. If the jumps that induce cycles, either of length 2 or of odd length, are denoted as *j₁, ..., j_{b},* each port *p* of the remaining *b* ports connects the switch *p*+*kt* with the switch *p*+*kt*+*jₜ,* where *k* is a number from 1 to 2^{a-1}, *t* is a number from 1 to 2*b*, and we set *j*_{*b*+*t*} = *jₜ.*

When programmed, this method is very compact and has linear complexity on the number of ports of the CIN. Thus, it quickly generates LACIN layouts for any even number of switches of practical interest, regardless of its size.

### Example 2:

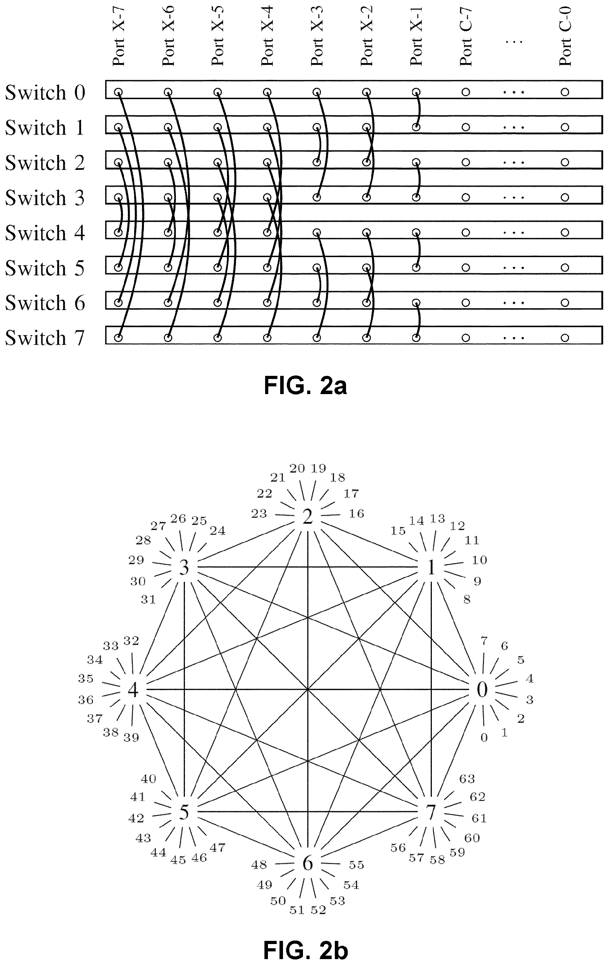

A case of particular interest is when the number of switches in a CIN, or 1D HyperX, is a power of two. This is a very interesting case of study since, on the one hand, most systems are dimensioned with such sizes. On the other hand, these sizes enable the use of a specific XOR wiring scheme used in HyperXor that also connects pairs of switches using the same port, thereby facilitating a simple method for wire classification, while also easing network deployment and maintenance. In such cases, an alternative LACIN layout can be obtained, which will hereinafter be referred to as "HyperXor" pattern connection. In Figures 2a-2b, a further XOR-based LACIN (1D HyperXor) equipping 8 switches is represented wherein the number of end-point computers or servers is 64 (8x8), and has the essential feature of connecting just aligned port switches, thereby avoiding wire crossing. However, it must be noted that the layout of this example is different than the one that would be produced by the method employed in Example 1, leading to Figure 1, and its generation method is much more compact and simpler, being thus advantageous, especially for networks with large numbers of servers. In this example, any pair of switches are linked using a wire that connects ports with index number equal to the bitwise exclusive-or of the index numbers of those switches minus 1 (assuming both indices start at 0, as in Figure 1). Observe that numbering the switches from 0 to N-1, but the ports from 1 to N-1, instead of from 0 to N-2 (as in Figure 2), any pair of switches will be connected using the pair of ports whose index number is the bitwise exclusive-or operation of the index numbers of those switches.

### Example 3:

The previous LACIN constructions can be directly applied to implement stand-alone CINs of any size. However, when the number of servers grows, single CINs (1D HyperX) can no longer be employed as networks, since the number of ports of the switches is bounded by technological limitations, impeding their scalability. Recent popular diameter-3 networks built upon CINs, such as Dragonfly and Dragonfly+ (or Megafly), have been developed and sold by industry. Another interesting network is the HyperX (or Flattened Butterfly). Such networks allow for a huge scalability at the expense of longer paths. The LACIN methodology described above can be used also for implementing the groups of a Dragonfly or any of the dimensions of a HyperX.

A 3D HyperX layout is defined in three dimensions (Z, Y, X). Typically, the number (S) of switches per dimension is the same. Switches must divide their ports to connect to both servers and switches in the directions of (Z, Y, X) dimensions. CINs (1D HyperX) of S switches are implemented in each of the three dimensions. Packets traveling between certain pairs of servers must cross up to the three dimensions, i.e., as many hops as the network diameter, which is three, the same as the number of dimensions.

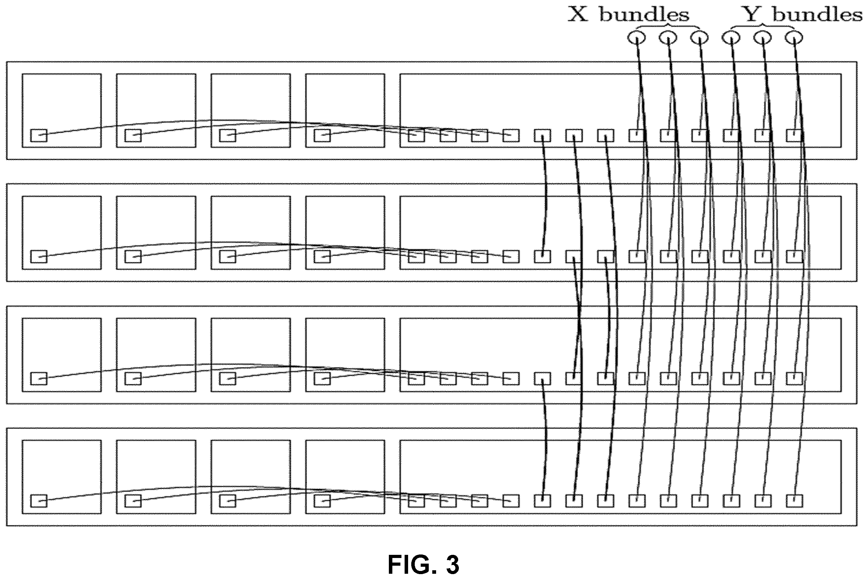

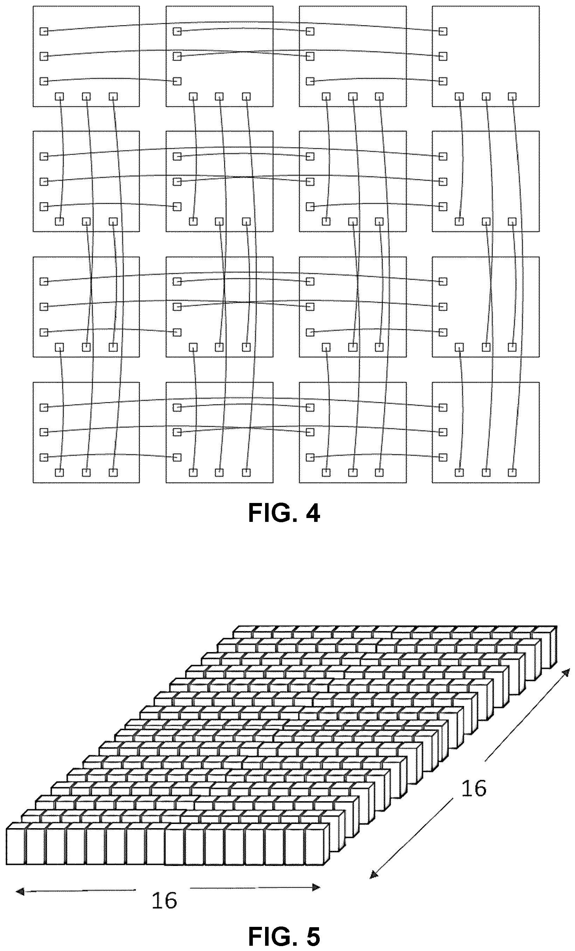

As a further exemplary embodiment of the invention, a small 4 × 4 × 4 HyperX network is depicted in Figure 3, wherein the dimension Z is implemented inside the racks, and the whole network, composed of sixteen (4 × 4) racks, is shown in Figure 4, where it is assumed that each rack contains four switches and sixteen servers, as in Figure 3, which depicts its internal organization and wiring. On each of its four rows (or chassis), there are four servers, comprising a network interface card (NIC) each, and a switch. The servers are represented by the four big squares on the left part of Figure 3, while the small squares inside each server correspond to NICs. The four switches, represented by rectangles on the right part of Figure 3, have nine ports represented by nine small squares inside each switch. The first four ports of each switch connect the four NICs of the four servers, or end-point computers, in the chassis that inject/eject data packets on such switch, and this configuration is followed by each of the four chassis. The next three ports of each switch are employed for building the local 4-switch XOR LACIN inside the rack in the direction of the Z dimension. The six wires or links inside the rack are arranged according to the previous XOR-based LACIN proposal (as in Example 2), thereby constituting a multi-dimensional HyperXor network. The next three ports of each switch are used for implementing the X dimension, and the same is done for dimension Y with the next three last ports. The four links attached to the switch ports of each one of the six columns, implementing dimensions X and Y, are grouped in six bundles or hoses of four wires. There are three X bundles for implementing the XOR LACIN between racks in the dimension X, and three Y bundles between racks for implementing the XOR LACIN in the dimension Y. Figure 4 depicts the whole HyperX network with a plant of sixteen (4x4) racks, implementing a 4-switch XOR LACIN each. For each rack, there are three X plugs, or super-ports, to connect the X bundles of four wires, and the same approach is followed for dimension Y. Such super-ports are represented by small squares inside the racks. A XOR LACIN methodology is employed to linearly arrange the bundles of wires between racks along the directions of X and Y dimensions, respectively. The final bundle XOR LACIN layout is represented in Figure 4. Note that, in this case, there are only forty-eight (6x8) bundles of four wires each, and six internal Z local wires per rack. As shown below, in Example 4, these numbers would scale up to 3840 (120x32) bundles of sixteen wires each, and 120 internal Z local wires per rack in a larger 16×16×16 HyperX network connecting 65536 servers. This means 61440 wires organized in 3840 bundles for connecting racks, and 30720 (120x256) local wires inside the racks for implementing dimension Z.

### Example 4:

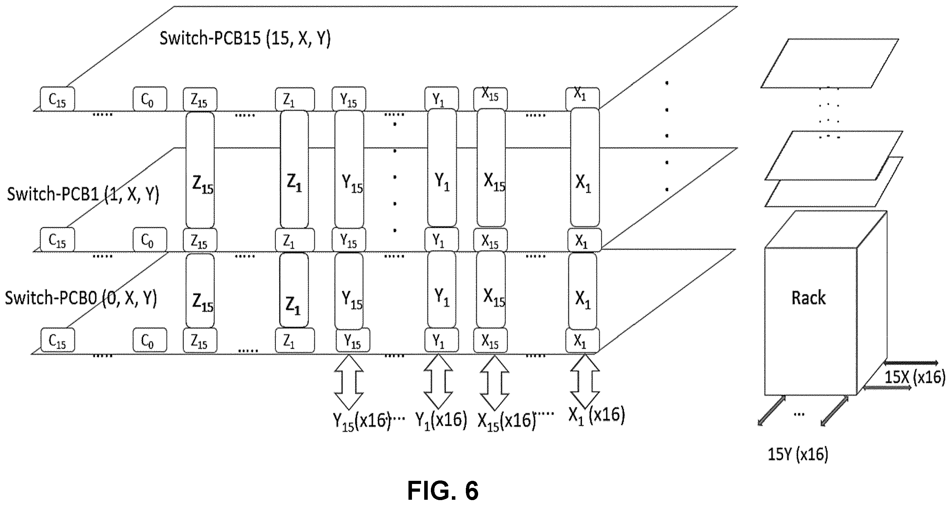

Following the same approach as in the previous examples, Figures 5-7 show different illustrations of a larger HyperXor deployment of a three-dimensional (3D) HyperX network, comprising an array of 16x16 racks arranged in the (X, Y) directions (see Figure 5). In this example, it is assumed that each rack is built of sixteen rack planes stacked in the Z direction (see Figure 6), wherein each plane comprises a switch with sixteen injection/ejection ports, and wherein each port is connected to one of the sixteen servers or end-point computers. As a result, each rack comprises 16 switches and 16 × 16= 256 servers, and the whole system comprises 256 × 16 × 16 = 65536 servers and 4096 switches. Moreover, besides the sixteen injection/ejection ports, each switch must have at least fifteen Z-ports (so as to vertically connect the sixteen switches in a XOR LACIN on each rack), fifteen X-ports and fifteen Y-ports (so as to connect each rack with other racks in the (X, Y) array), with a total of 61 ports. In a preferred embodiment of the invention based on this example, standard 64-port switches can be used, where the free ports in each switch can be used for other purposes, such as fault-tolerance or upgrading. The connection of the switches requires, accordingly, 92160 wire connections. Note that these specific numbers are provided only for illustrative purposes, and other embodiments of the invention can comprise different configurations of racks planes or rack arrays, which are also considered within the scope of the invention.

According to this embodiment of the invention, Figure 6 shows a rack plane distribution in the Z direction, forming a stack, wherein each rack plane represents a printed circuit board (PCB). The rack comprises sixteen switches (SWITCH-PCB₀... SWITCH-PCB₁₅), and each switch comprises sixteen injection/ejection ports for end-point computers (C₀... C₁₅), fifteen Z-ports (Z₁...Z₁₅), fifteen X-ports (X₁...X₁₅) and fifteen Y-ports (Y₁...Y₁₅). As represented in the figure, the Z-ports, X-ports and Y-ports in each rack plane are substantially aligned with the corresponding Z-, X- and Y-ports in the other planes, such that the wiring connections between a given Zᵢ, Xᵢ or Yᵢ port in a rack plane and a different given port Zⱼ, Xⱼ or Yⱼ port in other rack plane of the same rack are substantially parallel to other wiring connections in the same rack and, preferably, substantially parallel to the Z (vertical) direction inside the rack, such that the wiring lines run without crossing with other wiring lines corresponding to different port connections.

As further disclosed in Figure 6, each of the fifteen X- and Y- bundles comprises sixteen wires, corresponding to the different network ports per dimension of the sixteen switches in each rack. Each of the 16 switches has a port Xᵢ, with 1 ≤ i ≤ 15. Thus, the Xᵢ bundle will group the 16 wires that end in the 16 Xᵢ ports, one per switch. The same occurs with dimension Y. These wires can, in different embodiments of the invention, be grouped in hoses.

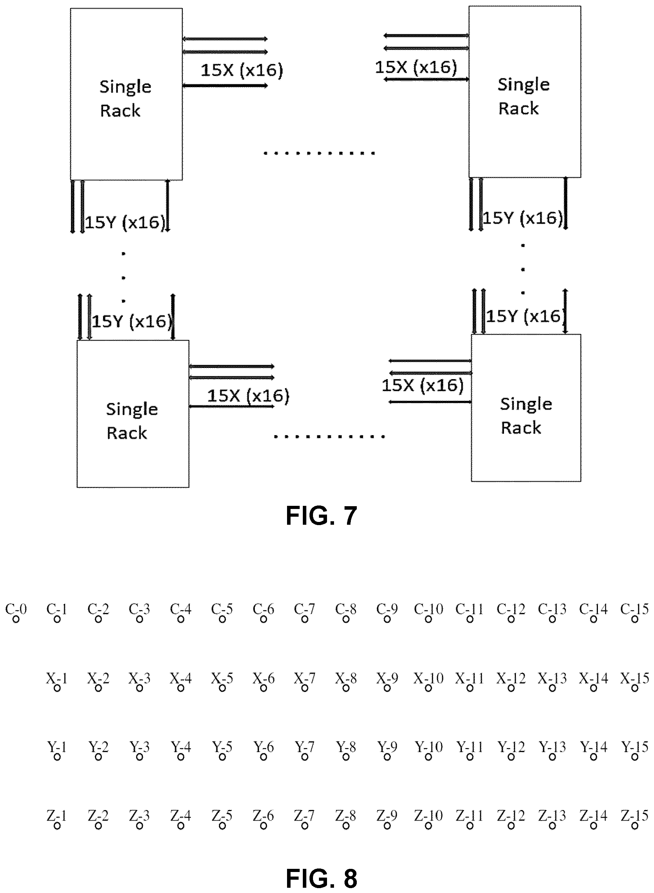

In further preferred embodiments of the invention, the same methodology can be applied to the wiring between racks, for organizing a whole machine in a 2D or 3D HyperXor network. Under these embodiments (see Figure 7), the connections between different racks in the (X, Y) plane can also follow independent and substantially parallel lines, thereby avoiding crossing between different hoses. More preferably, the connections between racks can be arranged aerially or underfloor, thus providing with more space for carrying out installation, repair or maintenance operations in the network.

As disclosed in preceding sections, the layout design of the invention does not add complexity to the switch connection requirements. This feature is remarkable in HPC systems since, for large numbers of servers, the wiring costs, in meters of wire, are lower than the costs of the switches and wire terminals. As a result, overall costs associated with the LACIN layouts of the invention are comparable to other CIN implementations. However, the proposed methodology substantially reduces wire connection complexity (which can be a severe problem in networks over hundreds or thousands of servers) compared to the prior art, and relaxes the need of applying complex wire labelling and coloring, as well as simplifying the operations of server replacement or repair inside the network.

As seen in the above examples, HyperXor networks apply the bit-wise XOR over the labels of any pair of switches to determine the port that links them. Such connection scheme greatly simplifies the conceptual view of the interconnection, and facilitates its deployment and maintenance. As a byproduct, a compact routing mechanism derived from the global addressing space of the system can be advantageously obtained.

In particular, The XOR connection scheme presented above can be applied to any HyperX whose number of switches is a power of two, regardless of it is going to be implemented linearly as LACIN or not. First of all, the HyperXor global address space is defined as follows:
As introduced before, a symmetric *qD* HyperXor system has 2" switches in each of its *q* (1... q) dimensions, with 2ⁿ end-point computers attached to each switch. Thus, the HyperXor system will have a total of 2^{(*q*+1)n} end-point computers. Then, each individual end-point computer, K, will be identified by *q*+1 digits of n bits each; that is, K = K_{q}... K₀. The first q digits K_{q}...K, are the switch coordinates and K₀ is the relative position of the individual end-point computer in that switch. For example, for a 3D HyperXor, an individual end-point computer K will be identified by its global address K = Kz K_{Y} Kx Kc, where Kz, K_{Y}, Kx are the switch coordinates, and Kc is the position of the individual computer in that switch.

From the previous global address space of the HyperXor system, it can be derived a simple routing method that can be applied to both packet and circuit switching schemes, and also to both minimal and non-minimal strategies. In the following paragraphs a routing method for a general *qD* HyperXor system will be described, along with some specific examples for 1D and 3D cases.

Ports in the switches are of two classes. There are always 2ⁿ ports named C, with C = C₂ⁿ₋₁ ...C₀, devoted to connecting end-point computers. And there are also *q*(2ⁿ - 1) network ports, 2ⁿ - 1 per dimension, named P, with P = P₂ⁿ₋₁...P₁, to interconnect with other switches. Such network ports are identified by *i*-P, with *q* ≤ *i* ≤ 1, where *i* is the HyperXor dimension to which the port belongs. And P, with 2ⁿ-1 ≤ P ≤ 1, is the binary port label of the HyperXor for the dimension *i*. For instance, in the particular case of a 3D HyperXor network, Figure 8 shows the aliases of the four subsets of ports for any switch S.

### A. 1D HyperXor routing

When the ports of a 1D HyperX of size 2" are connected using the XOR scheme, the bit-wise XOR of the switch labels provides a compact routing function. The same function P = O ⊕ D, which determines the two ports and the wire that connects switch O with the switch D, provides the port that must be used to send data through a minimal route from O to D.

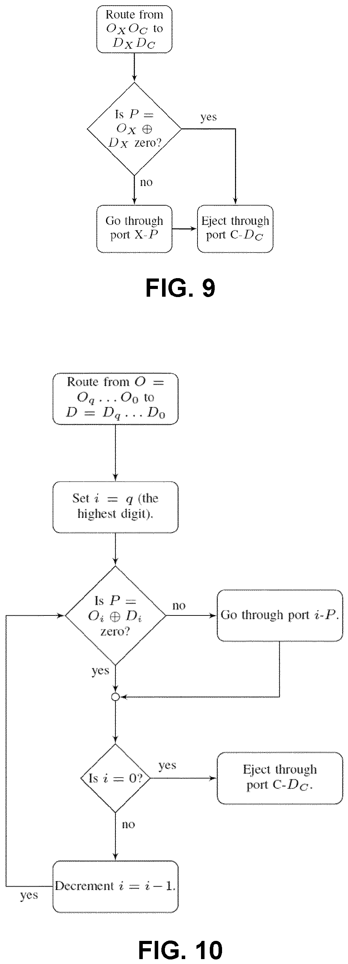

Example A.1: Figure 9 shows a flow chart of an algorithmic routing for 1D HyperXor networks. The 1D HyperXor of size N = 8 is going to be used in this example, wherein there are 64 computers labeled from 0 to 63. Thus, a computer K will have a global address of 6 bits, which can be seen as two digits of 3 bits K = Kx Kc. The low-order digit Kc identifies the end-point computer, and the high-order digit Kx identifies the switch. If an origin computer O = O_{X} O_{C} wishes to send data through a minimal path to a destination computer D = Dx Dc, it will have to employ the port Ox ⊕ Dx at the source switch and the port Dc at the destination switch for such communication. When two computers connected to the same switch want to communicate, then O_{X} ⊕ D_{X} = 0, which means that there is no need to exit the switch. In such a case, the port DC will be simply chosen at the switch that connects both computers.

### B. Multi-dimensional HyperXor Routing

In Figure 10 it is described a general algorithmic routing for multidimensional HyperXor networks. As can be seen, it is an extension of the previous 1D routing scheme. This routing scheme is a Dimension Ordered Routing (DOR) since it provides the hops to be made, ordered by dimension. It is also a deadlock-free routing that does not need virtual channels, neither forwarding tables. For better understanding, the 3D case is elaborated next.

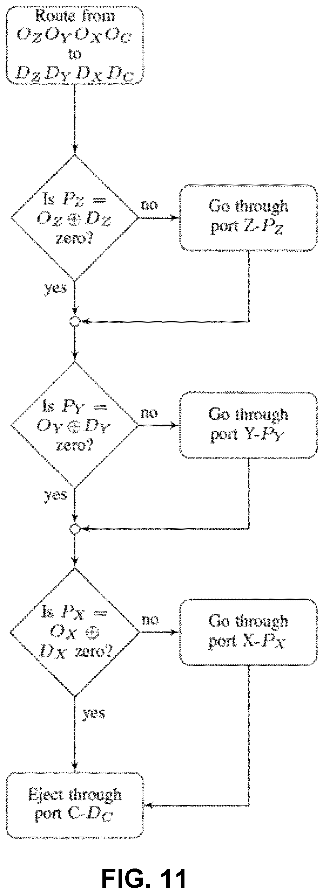

Example B.1: Figure 11 shows a flow chart for the 3D HyperXor routing. Considering the previous Example A.1 of a 65536-computer system built from 64-port switches, and arranged as a 3D 16×16×16 HyperXor system, a computer in this HyperXor network will be identified by its 16-bit address, which can be seen as four digits of 4 bits each, that is K = K_{Z} K_{Y} K_{X} K_{C}. The high-order 3 digits K_{Z} K_{Y} K_{X} identify the coordinates of one of the 4096 switches present in the 3D system network, and the low-order digit K_{C} identifies a specific computer connected to this switch. The digit Kx identifies the X coordinate, while the same occurs with K_{Y} for identifying the Y coordinate and K_{Z} for the Z one, each switch having the ports shown in Figure 8. As described in the previous example, if an origin computer O = O_{Z} O_{Y} O_{X} O_{C} wishes to send a packet to a destination computer D = D_{Z} D_{Y} D_{X} D_{C} through a minimal path, it will have to employ the port Ox ⊕ Dx at the source router to travel through the dimension X. The same applies to port O_{Y} ⊕ D_{Y}, used to route through the dimension Y, and port O_{Z} ⊕ D_{Z} for the dimension Z. The digit Dc will be used to select the port at the destination switch. Any of the digits resulting after applying the XOR function can be 0, which indicates that the corresponding dimension must be skipped, as traveling for such dimension is not needed for such particular communication flow. When all the resulting XOR of the digits are 0, it means that the two communicating computers are attached to the same switch.

It should be noted that the previous algorithmic routing schemes, that only use the switch labels, can be also used to implement source-based routing mechanisms. In these cases, a routing record is generated at the source end-point computer when injecting a message in the network. This routing record contains all the ports to be used along the whole path. When using packet switching, the routing record travels in the message header and is used and actualized on each hop. When using circuit switching, the routing record serves to establish the circuit between origin and destination switches.

The routing record needed in HyperXor networks is generated by a single XOR operation. If, for example, in a 3D HyperXor, an origin computer O = O_{Z} O_{Y} O_{X} O_{C} wants to send data to a destination computer D = D_{Z} D_{Y} D_{X} D_{C} through a minimal path, its routing record will be composed of port Ox ⊕ D_{X}, port O_{Y} ⊕ D_{Y}, port Oz ⊕ D_{Z}, and port D_{C}. The last digit is used to select the port at the destination switch.

### C. Evolved Routing Algorithms

In HPC systems as HyperXor, depending on the application, the network traffic generated by the communications among endpoint computers can be either benign or adverse. For benign random uniform traffic, minimal routing schemes (travelling through the shortest paths), as the mechanisms shown above, are the best option. Nevertheless, when traffic is biassed, longer non-minimal paths must be employed to balance the use of network links. To deal with this dynamic behaviour, different evolved routing mechanisms use either minimal or non-minimal paths depending on the traffic nature. It is known that the length of non-minimal paths can be, at most, 2q, with q standing for the network diameter. The connection scheme used in HyperXor systems provides extra information that these evolved routing mechanisms can employ for their advantage.

The HyperXor connection scheme can be successfully exploited to implement such evolved routing mechanisms. The algebraic properties of the XOR function help to easily identify and classify ports, links, switches and computers in the system. It is known, for example, that if P = O ⊕ D, then D = O⊕P and O = D⊕P, which means that switch D is achieved from switch O through port P and switch O, achieved from switch D through the same port P. Hence, only knowing the label of a switch, it can be immediately inferred the switches which are connected to it through each of its ports.

Polarized routing (see C. Camarero, C. Martinez, and R. Beivide, "Polarized routing: an efficient and versatile algorithm for large direct networks," in 2021 IEEE Symposium on High-Performance Interconnects (HOTI), 2021, pp. 52-59.) was introduced as an adaptive nonminimal progressive solution for many networks, including HyperX. This mechanism makes decisions based on the distance from the switch which is taking the routing decision to source and destination switches. This information would usually be stored in a routing table that must be accessed twice in each switch along a path. Using these distance data, polarized routing assigns a penalty to each port for each communication flow, which is added to the queue population count of such port, assigning a weight to each port. Polarized routing always selects a port with minimal weight. This procedure is applied on every switch along a path. The connection scheme of HyperXor networks allows to avoid the use of forwarding tables in polarized routing by computing simple XOR operations at each hop along a path. In particular, if O and D denote source and destination switches on a HyperXor, its distances to the current switch C, in which the routing decision has to be made, can be easily calculated. Such distances are the *q*-ary Hamming distance between C and D, and between C and O, wherein the *q*-ary Hamming distance between two switches, O and D, is the number of coordinates in which their labels differ. Such distances can be easily obtained using C ⊕ D and C ⊕ O, with some few simple OR and AND added logic. Moreover, since neighbour switches can be identified through simple XOR bit operations, the distances from these neighbour switches to O and D can also be locally calculated in parallel in the current switch, with the same procedure. Such distances will be easily obtained from C⊕D⊕P and C⊕O⊕P, for each port in the current switch. The hardware implementation is only based on single XOR gates and some few added simple gates. Thus, polarized routing, an adaptive non-minimal progressive mechanism, can be also implemented on a HyperXor network without forwarding tables. The same occurs with other evolved routing mechanisms, when leveraging the HyperXor connection pattern scheme.

As described above, the XOR connection pattern leads to the HyperXor routing, a compact mechanism derived from the global addressing scheme of the described HyperXor system. Consequently, the HyperXor routing algorithm does not need the use of forwarding tables, which leads to cheaper implementations. Such basic minimal routing can be used in an algorithmic way or using routing records, as in source-based routing schemes. It can be employed with either packet switching or circuit switching. Moreover, together with other simple and practicable enhancements, the HyperXor connection scheme leads to evolved adaptive non-minimal routing mechanisms.

HyperXor networks are also especially suitable for mapping collective communications, such as all-to-all, all-reduce, and others that have efficient implementations based on the XOR function. For example, the recursive doubling algorithm for the all-reduce collective organizes each computer as a corner of a logical hypercube. It can compute an all-reduce in a logarithmic number of rounds, where each round consists of pairwise exchanges and reductions of partial sums between neighboring computers on each dimension of the hypercube.

## Claims

1. System for connecting a q-dimensional network, wherein:
- the system comprises a plurality of end-point computers arranged in a plurality of computer groups;
- each computer group is connected to a switch, wherein each switch comprises a plurality of ports comprising, in turn, a first port group for connecting the switch to a computer group, and q groups of ports for connecting the switch to the remainder computer groups in each network dimension, forming an interconnection topology based on complete graphs along q dimensions, with q being an integer number;
- switches are aligned along the q dimensions with their q port groups substantially aligned in each network dimension; and
- switches in the system are connected by means of ports organized in q dimensions; wherein, advantageously, each port of every switch in each of the q port groups, or dimensions, is connected to the same port of the same port group or dimension of a different switch in each dimension, by means of a wire connection and, for any pair of switches, only pairs of ports that occupy identical positions according to a same index number are connected;
wherein the wire connecting the ports of different switches are arranged in sets or guides of wires along the dimension in which switches are aligned, such that the wire sets do not cross;
wherein the system has a number of switches per dimension that is a power of two, 2", and a number of 2" end-point computers in each computer group; and
wherein each individual end-point computer, K, is identified by *q*+1 digits of n bits each, K = K_{q}... K₀, with the first q digits K_{q}... K₁ being the switch coordinates, and K₀ being the relative position of the individual end-point computer in that switch and, for a numbering of the switches and their ports, every pair of switches is linked through a single wire that connects a pair of ports whose index number is the bitwise exclusive-or, XOR, operation of the index numbers of the switches being connected.

2. System according to the preceding claim, wherein the system forms part of a larger interconnection network which is not a system, but a topology in which wire connections are grouped as a HyperX or a set of HyperX topologies.

3. System according to the preceding claim, wherein the topology is a 2-dimensional or a 3-dimensional HyperX and comprises a lineal or matrix array of computer racks arranged in substantially horizontal dimensions (X, Y), and, wherein each computer rack comprises one or more computer groups connected each to a connection switch composing the system in a dimension.

4. System according to any of claims 2-3, wherein the topology comprises at least one of the following network topologies: Dragonfly, Dragonfly+, Megafly, Flattened Butterfly, HyperX.

5. System according to any of the preceding claims, wherein the inter-rack wires that connect ports in a set are bundled together in hoses.

6. System according to any of the preceding claims, wherein the interconnection topology is 1-dimensional, q=1, 2-dimensional, q=2, or 3-dimensional, q=3.

7. System according to any of the preceding claims, wherein at least two switches are arranged in a computer rack.

8. System according to the preceding claim, wherein the wire connections between the computer racks are arranged underfloor or aerially substantially along at least a horizontal dimension (X, Y).

9. System according to any of the preceding claims, wherein the system is implemented:
- as a Network-on-Chip;
- as a multi-chip module using different interposers; and/or
- on a printed circuit board, PCB.

10. System according to any of the preceding claims, wherein:
- at least a computer group is connected to a connection switch through injection/ejection ports;
- at least a switch further comprises extra fault-tolerance or upgrading ports;
- at least a computer group and a switch are integrated in a printed circuit board, PCB; and/or
- the wires are labelled by text or by coloring.

11. Method for routing data between the end-point computers connected to the switches of a system according to any of the preceding claims,
wherein the ports in the switches comprise 2ⁿ ports named C, with C = C₂ⁿ₋₁ ...C₀, connecting end-point computers, and *q*(2ⁿ - 1) network ports, 2ⁿ - 1 per dimension, named P, with P = P₂ⁿ₋₁...P₁, interconnected with other switches,
wherein the network ports are identified by *i*-P, with *q* ≤ *i* ≤ 1, where *i* is the system's dimension to which the port belongs, and P, with 2ⁿ-1 ≤ P ≤ 1, is the binary port label of the system for the dimension *i*;
**characterised in that** said method comprises performing the following routing steps for routing data from an origin computer *O* = *O_{q}...O₀* to a destination computer *D* = *D_{q}...D₀:*
a) for *i* = *q,* if *P* = *Oᵢ* ⊕ *Dᵢ* is zero, then perform step b), otherwise go through port *i-P* and perform step b);
b) if *i* = 0, then eject through port *C*-*D_{c}*, otherwise perform step c);
c) perform a decrement *i* = *i -* 1, and then perform step a).

12. Method according to the preceding claim, wherein the data is sent through a minimal path between the origin computer *O* and the destination computer *D*.

13. Method according to claim 11, wherein the data is sent through a non-minimal path between the origin computer O and the destination computer D, wherein the length of non-minimal path is equal or less than 2q, wherein q is the network diameter.

14. Method according to any of claims 11-13, wherein the data is sent following an adaptative routing algorithm, using minimal paths or non-minimal paths depending on the data traffic between the end-point computers.

15. Method according to the preceding claim, wherein the adaptative routing algorithm comprises a Polarized routing algorithm or an adaptive non-minimal routing scheme proposed for a HyperX network.
